# DEMANDE DE BREVET EUROPEEN

(11) **EP 2 915 450 A1**
(43) Date de publication de la demande: **09.09.2015**
(21) Numéro de dépôt: 15154954.0
(22) Date de dépôt: 13.02.2015
(51) Int. Cl.: A47B 13/00, A47B 13/02

(54) **Pièce de jonction pour table pliante**

(30) Priorité: 03.03.2014 FR 1451671
(71) Demandeur: Lafuma Mobilier S.A.S., 26140 Anneyron (FR)
(72) Inventeur: Gouttenoire, Sébastien, 01100 Apremont (FR); Le Gal, Yann, 38330 Biviers (FR); Pernet, Jean-Noël, 01430 Ccondamine La Doye (FR)
(74) Mandataire: Chevalier, Renaud Philippe

(57) **Abrégé**

L'invention concerne une pièce de jonction (1) pour table pliante (200), destinée à joindre un piètement (202) à un plateau (201), caractérisée en ce que ladite pièce de jonction (1) comprend:
- une base (2) destinée à être au contact du plateau (201),
- au moins un premier logement (6) s'étendant dans une direction selon un axe longitudinal (A-A), le premier logement (6) présentant une première extrémité (6a) ouverte pour l'introduction d'une barre de renfort (101) et une seconde extrémité (6b) fermée,
- une portion de fixation (4) ménagée du côté de la seconde extrémité (6b) du premier logement (6), la portion de fixation (4) étant déportée par rapport à l'axe longitudinal (A-A) du premier logement (6) de sorte que la portion de fixation (4) soit orientée vers l'extérieur du plateau (201) une fois que la pièce de jonction (1) est fixée sur le plateau (201).

## Description

L'invention concerne le domaine du mobilier pliant et concerne plus particulièrement, les pièces de jonction positionnées entre le piètement et le plateau du mobilier pliant.

Conventionnellement, le mobilier pliant comprend un plateau ou toute autre surface de support, sur lequel sont fixés des pieds.

De manière connue, les pieds s'étendent, lorsqu'ils sont déployés, dans une direction sensiblement parallèle au plan du plateau lorsqu'ils sont repliés.

Généralement, les pieds du mobilier pliant sont articulés pour permettre leur pliage contre le plateau. Le mécanisme d'articulation et les organes d'articulation associés sont traditionnellement placés sous le plateau du mobilier et de préférence à la périphérie de ce dernier, notamment dans chaque coin lorsque le plateau est de forme parallélépipédique. Malheureusement, ce positionnement a pour incidence que le mécanisme d'articulation et les organes d'articulation associés entrent dans le champ de vision d'une personne située à proximité lorsque le mobilier est en position déployée, ce qui constitue une imperfection d'un point de vue esthétique. De plus, la fixation de ces éléments sur le plateau s'avère peu aisée.

Dans certains mobiliers pliants connus, le mécanisme d'articulation est déporté au centre du plateau pour éviter la visibilité de ce dernier, cependant le mécanisme devient alors encombrant et gênant.

L'invention a pour but de remédier à tout ou partie des inconvénients précités.

L'invention a pour objet une pièce de jonction pour table pliante, destinée à joindre un piètement à un plateau, caractérisée en ce que ladite pièce de jonction comprend:
- une base destinée à être au contact du plateau,
- au moins un premier logement s'étendant dans une direction selon un axe longitudinal, le premier logement présentant une première extrémité ouverte pour l'introduction d'une barre de renfort et une seconde extrémité fermée,
- une portion de fixation ménagée du côté de la seconde extrémité du premier logement, la portion de fixation étant déportée par rapport à l'axe longitudinal du premier logement de sorte que la portion de fixation soit orientée vers l'extérieur du plateau une fois que la pièce de jonction est fixée sur le plateau.

Ainsi, un tel décalage de la portion de fixation par rapport au premier logement permet de dissimuler visuellement le premier logement ainsi que la barre de renfort de la table pliante puisque ces derniers se retrouvent de ce fait à une plus grande distance de la périphérie de plateau.

Selon une caractéristique de l'invention, la portion de fixation comprend un unique organe de fixation configuré pour fixer la pièce de jonction au plateau de la table pliante. L'utilisation d'une fixation unique permet de réduire les coûts et de simplifier la fixation du piètement sur le plateau.

Selon une caractéristique de l'invention, le premier logement est équipé d'un élément de fixation configuré pour fixer la barre de renfort à la pièce de jonction.

Selon une caractéristique de l'invention, la pièce de jonction comprend un deuxième logement s'étendant dans une direction selon un axe longitudinal, l'axe longitudinal du deuxième logement étant sécant par rapport à l'axe longitudinal du premier logement.

Avantageusement, l'agencement du deuxième logement par rapport au premier logement permet d'obtenir une forme de pièce de jonction adaptée à la forme d'une partie du plateau de la table pliante, de préférence un coin. L'angle formé par le premier logement et le deuxième logement est variable en fonction de la géométrie du plateau et de la zone de fixation de la pièce de jonction. Préférentiellement, le deuxième logement s'étend dans une direction sensiblement perpendiculaire par rapport au premier logement.

Selon une caractéristique de l'invention, la portion de fixation présente une forme adaptée pour être positionnée dans un coin de la table pliante. Préférentiellement, la portion de fixation est de forme oblongue, dont une partie arrondie vient sensiblement s'accorder avec un coin arrondi du plateau.

Selon une caractéristique de l'invention, le deuxième logement comprend une première extrémité ouverte pour l'introduction d'une barre de renfort et une seconde extrémité fermée, la portion de fixation étant positionnée du côté de la seconde extrémité du deuxième logement.

Selon une caractéristique de l'invention, un empâtement est prévu sur au moins une partie de la périphérie de la base de la pièce de jonction. Ainsi, la pièce de jonction présente une plus grande surface de contact avec le plateau, ce qui permet d'améliorer la tenue du plateau sur le piètement et d'accroître la résistance de la pièce de jonction aux contraintes exercées par le plateau.

L'invention a également pour objet un système de renfort de table pliante, caractérisé en ce que le système de renfort comprend au moins une pièce de jonction selon l'invention, au moins une barre de renfort, ladite barre de renfort étant insérée dans un premier logement de la pièce de jonction.

Selon une caractéristique de l'invention, le système de renfort comprend au moins une première pièce de jonction et une deuxième pièce de jonction, la première pièce de jonction étant reliée à la deuxième pièce de jonction par une barre de renfort. Avantageusement, chaque pièce de jonction est fixée au plateau via l'unique organe de fixation prévu au niveau de leur portion de fixation respective. La liaison de la première pièce de jonction avec la deuxième pièce de jonction permet de limiter le risque de déplacement en rotation de chaque pièce de jonction.

Selon une caractéristique de l'invention, le système de renfort présente une forme parallélépipédique et comprend quatre pièces de jonction, chacune des pièces de jonction étant positionnée à un coin dudit système de renfort. Le système de renfort ainsi conçu permet de renforcer et supporter les bords du plateau de la table pliante discrètement. En outre, les pièces de jonction étant toutes liées les unes autres via des barres de renfort, le système de renfort est autoportant et ne nécessite que quatre points de fixation au plateau, les points de fixation étant respectivement répartis chacun sur une portion de fixation d'une pièce de jonction. Avantageusement, les pièces de jonction sont positionnées dans les coins du plateau parallélépipédique de la table pliante et les barres de renfort sont situées en retrait par rapport aux bords du plateau.

Bien entendu, le nombre de pièce de jonction n'est pas limité à deux ou quatre, le système de renfort est prévu pour comprendre une ou plusieurs pièces de jonction selon la géométrie du plateau de la table pliante.

L'invention sera mieux comprise, grâce à la description ci-après, qui se rapporte à un mode de réalisation selon la présente invention, donné à titre d'exemple non limitatif et expliqué avec référence aux dessins schématiques annexés, dans lesquels:
- la figure 1 représente une vue partielle de face d'un système de renfort selon l'invention monté sur un plateau, et,
- la figure 2 représente un système de renfort selon l'invention monté sur une table pliante en position repliée.

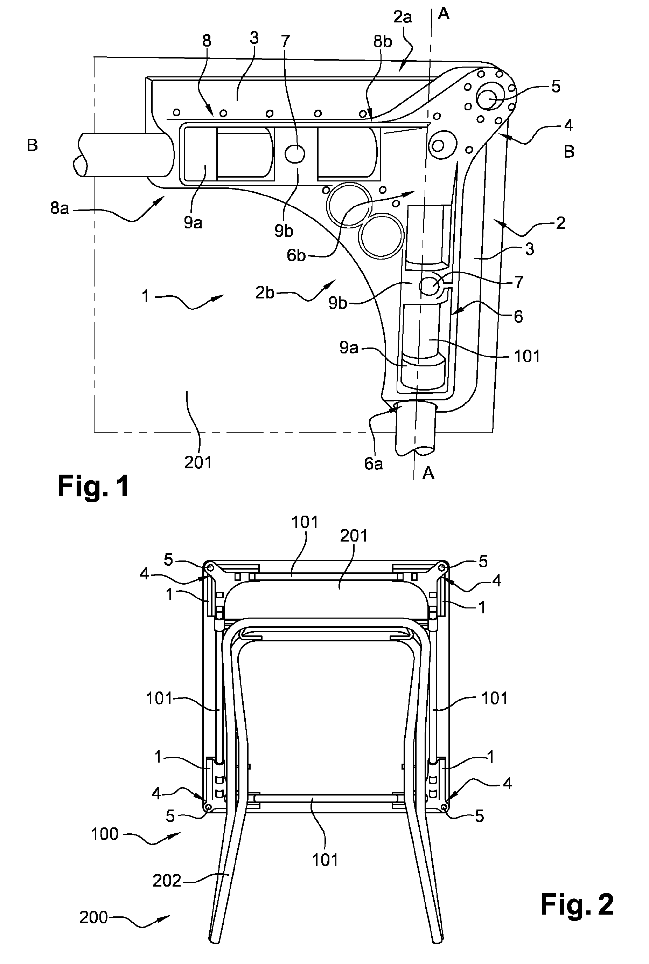

Dans l'exemple illustré en figure 1, la pièce de jonction 1 comprend une base 2 de forme sensiblement triangulaire. La base 2 comprend un bord extérieur 2a orienté vers l'extérieur de la table pliante 200 quand la pièce de jonction 1 est montée sur le plateau 201 de la table pliante 200 et un bord intérieur 2b orienté vers l'intérieur de la table pliante 200 quand la pièce de jonction 1 est montée sur le plateau 201. La base 2 comprend un empâtement 3 s'étendant sur au moins une partie du bord extérieur 2a, comme on peut le voir en figure 1.

En outre, la pièce de jonction 1 comprend une portion de fixation 4. L'empâtement 3 de la base 2 est disposé de part et d'autre de la portion de fixation 4. La portion de fixation 4 est de forme préférentielle oblongue et comprend un unique organe de fixation 5 conçu pour fixer la pièce de jonction 1 sur le plateau 201.

La pièce de jonction 1 comprend un premier logement 6 s'étendant selon un axe longitudinal A-A et présentant une première extrémité 6a et une seconde extrémité 6b. La première extrémité 6a est ouverte pour la réception d'une barre de renfort 101. La seconde extrémité 6b est fermée formant ainsi une butée contre laquelle la barre de renfort 101 est destinée à venir.

Comme on peut le voir en figure 1, la portion de fixation 4 est positionnée du côté de la seconde extrémité 6b du premier logement 6, la portion de fixation 4 étant déportée par rapport à l'axe longitudinal A-A du premier logement 6 de sorte que la portion de fixation 4 soit orientée vers l'extérieur du plateau 201 lorsque la pièce de jonction 1 est fixée sur le plateau 201.

Comme illustré en figure 1, la portion de fixation 4 et le premier logement 6 sont positionnés l'un par rapport à l'autre de telle sorte qu'ils forment un angle obtus.

En figure 1, le premier logement 6 présente une ouverture formant une fenêtre s'étend en partie le long du premier logement 6. Cette ouverture permet de contrôler visuellement l'insertion de la barre de renfort 101 dans le premier logement 6. La barre de renfort 101 est empêchée de se mouvoir dans une direction perpendiculaire au plan du plateau 201 grâce à un premier tronçon de matière 9a présenté par le logement 6 et situé au niveau de la première extrémité 6a du premier logement 6.

De plus, le logement 6 présente un deuxième tronçon de matière 9b dans lequel est ménagé un trou borgne destiné à recevoir un élément de fixation 7. L'élément de fixation 7 est configuré pour solidariser la barre de renfort 101 au premier logement 6 de sorte que la barre de renfort 101 est maintenue fixe, d'une part, en rotation autour de l'axe longitudinal A-A, et d'autre part, en translation le long de l'axe longitudinal A-A. L'élément de fixation 7 relie uniquement le premier logement 6 à la barre de renfort 101.

Dans l'exemple illustré en figure 1, la pièce de jonction comprend un deuxième logement 8, sensiblement identique au premier logement 6. Le deuxième logement 8 s'étend selon un axe longitudinal B-B sensiblement perpendiculaire à l'axe longitudinal A-A du premier logement 6.

Le deuxième logement 8 présente une première extrémité 8a et une seconde extrémité 8b. La première extrémité 8a est ouverte pour la réception d'une barre de renfort 101, différente de la barre de renfort 101 reçue dans le premier logement 6. La seconde extrémité 8b est fermée formant ainsi une butée contre laquelle la barre de renfort 101 est destinée à venir.

Comme-dit précédemment, le deuxième logement 8 est identique au premier logement 6 et donc par conséquent, le deuxième logement 8 présente également une ouverture, un premier tronçon de matière 9a et un deuxième tronçon de matière 9b recevant un autre élément de fixation 7. Ledit élément de fixation 7 est configuré pour solidariser la barre de renfort 101 au deuxième logement 8 de sorte que la barre de renfort 101 est maintenue fixe, d'une part, en rotation autour de l'axe longitudinal B-B, et d'autre part, en translation le long de l'axe longitudinal B-B. L'élément de fixation 7 relie uniquement le deuxième logement 8 à la barre de renfort 101.

La portion de fixation 4 est positionnée du côté de la seconde extrémité 8b du deuxième logement 8, la portion de fixation 4 étant déportée par rapport à l'axe longitudinal B-B du deuxième logement 8 de sorte que la portion de fixation 4 soit orientée vers l'extérieur du plateau 201 lorsque la pièce de jonction 1 est fixée sur le plateau 201.

En figure 1, on peut voir que la portion de fixation 4 et le deuxième logement 8 sont positionnés l'un par rapport à l'autre de telle sorte qu'ils forment un angle obtus. Avantageusement, la portion de fixation 4 est positionnée entre le premier logement 6 et le deuxième logement 8 et plus particulièrement au niveau des secondes extrémités respectives 8b, 6b des logements 8, 6.

La figure 2 représente un système de renfort 100 monté sur une table pliante 200. Le système de renfort 100 est l'interface entre le plateau 201 de la table pliante 200 et le piètement 202 de la table pliante 200.

Le système de renfort 100 représenté en figure 2 comprend quatre pièces de jonction 1 comme représenté en figure 1, lesdites pièces de jonction 1 étant chacune reliée à une autre pièce de jonction 1 par une barre de renfort 101. Avantageusement, les pièces de jonction 1 sont positionnées dans les coins du plateau 201 parallélépipédique de la table pliante 200 et les barres de renfort 101 sont situées en retrait par rapport aux bords du plateau 201.

Le système de renfort 100 est maintenu sur le plateau 201 via les organes de fixation 5 ménagés dans chaque portion de fixation 4 de chaque pièce de jonction 1. Les barres de renfort 101 sont chacune fixées à leurs extrémités dans une pièce de jonction via des éléments de fixation 7.

Bien entendu, l'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Pièce de jonction (1) pour table pliante (200), destinée à joindre un piètement (202) à un plateau (201), **caractérisée en ce que** ladite pièce de jonction (1) comprend:
- une base (2) destinée à être au contact du plateau (201),
- au moins un premier logement (6) s'étendant dans une direction selon un axe longitudinal (A-A), le premier logement (6) présentant une première extrémité (6a) ouverte pour l'introduction d'une barre de renfort (101) et une seconde extrémité (6b) fermée,
- une portion de fixation (4) ménagée du côté de la seconde extrémité (6b) du premier logement (6), la portion de fixation (4) étant déportée par rapport à l'axe longitudinal (A-A) du premier logement (6) de sorte que la portion de fixation (4) soit orientée vers l'extérieur du plateau (201) une fois que la pièce de jonction (1) est fixée sur le plateau (201).

2. Pièce de jonction selon la revendication 1, dans laquelle la portion de fixation (4) comprend un unique organe de fixation (5) configuré pour fixer la pièce de jonction (1) au plateau (201) de la table pliante (200).

3. Pièce de jonction selon l'une quelconque des revendications 1 ou 2, dans laquelle le premier logement (6) est équipé d'un élément de fixation (7) configuré pour fixer la barre de renfort (6) à la pièce de jonction (1).

4. Pièce de jonction selon l'une quelconque des revendications 1 à 3, dans laquelle la pièce de jonction (1) comprend un deuxième logement (8) s'étendant dans une direction selon un axe longitudinal (B-B), l'axe longitudinal (B-B) du deuxième logement (8) étant sécant par rapport à l'axe longitudinal (A-A) du premier logement (6).

5. Pièce de jonction selon la revendication 4, dans laquelle le deuxième logement (8) s'étend dans une direction sensiblement perpendiculaire par rapport au premier logement (6).

6. Pièce de jonction selon l'une quelconque des revendications 4 ou 5, dans laquelle le deuxième logement (8) comprend une première extrémité (8a) ouverte pour l'introduction d'une barre de renfort (101) et une seconde extrémité (8b) fermée, la portion de fixation (4) étant positionnée du côté de la seconde extrémité (8b) du deuxième logement (8).

7. Pièce de jonction selon l'une quelconque des revendications 1 à 6, **caractérisée en ce que** la base (2) de la pièce de jonction (1) comprend un empâtement (3) sur au moins une partie de la périphérie de la pièce de jonction (1).

8. Système de renfort (100) de table pliante (200), **caractérisé en ce que** le système de renfort (100) comprend au moins une pièce de jonction (1) selon l'une quelconque revendication 1 à 7, au moins une barre de renfort (101, ladite barre de renfort (101) étant insérée dans un premier logement (6) de la pièce de jonction (1).

9. Système de renfort, selon la revendication 8, dans lequel le système de renfort (100) comprend au moins une première pièce de jonction (1) et une deuxième pièce de jonction (1), la première pièce de jonction (1) étant reliée à la deuxième pièce de jonction (1) par une barre de renfort (101).

10. Système de renfort selon l'une quelconque des revendications 8 ou 9, dans lequel le système de renfort (100) présente une forme parallélépipédique et comprend quatre pièces de jonction (1), chacune des pièces de jonction (1) étant positionnée à un coin dudit système de renfort (100).
